# EUROPEAN PATENT SPECIFICATION

(11) **EP 2 260 248 B1**
(45) Date of publication and mention of the grant of the patent: **12.09.2012**
(21) Application number: 09715129.4
(22) Date of filing: 27.02.2009
(51) Int. Cl.: F24J 2/46, F24J 2/52

(54) **BOX STRUCTURE FIXING ASSEMBLY**
KASTENSTRUKTUR MIT BEFESTIGUNGSANORDNUNG
STRUCTURE DE BOITIER ET ASSEMBLAGE DE FIXATION

(30) Priority: 27.02.2008 PL 38456508
(43) Date of publication of application: 15.12.2010
(73) Proprietor: Fakro PP Spolka Z O.O., 33-300 Nowy Sacz (PL)
(72) Inventor: MAJOCH, Waclaw, 33-300 Nowy Sacz (PL)
(74) Representative: Lukaszyk, Szymon
(86) International application number: PCT/PL2009/050002
(87) International publication number: WO 2009/108076

(56) References cited:
- EP-A- 0 116 101
- EP-A- 0 554 635
- AU-B2- 621 215
- DE-A1- 2 411 911
- DE-U1- 20 007 423
- US-A- 4 622 951
- US-A- 6 145 165

## Description

The subject of the invention is a box structure fixing assembly, especially for a solar collector, designed to connect it by means of sliding-and-turning fixtures, or only sliding ones, fastening it to the substrate. The invention includes also an assembly for fixing the box structure on a discontinuous base, e.g. on battens of roof structures. The invention can be applied mainly for solar collectors sunk in the roofing and resting on its supporting structure.

Known are metallic box structures with parts fixing them to the substrate or base, especially in the form of metal fixing bars placed along the walls of the box structure, the bars being made with holes for fixing elements, e.g., screw fasteners, anchoring it to the substrate. In instances when the substrate is a discontinuous arrangement of beams, slats or battens, the accurate spacing of which cannot be known in advance to the manufacturer of the box structure, the fixing rods are provided with an adequately large number of holes so as to enable using one of them for fixing. This requires more material, increases labor consumption in manufacturing the box structure, and enables only a stepped adjustment of the location of fixtures.

AU 621 215 discloses a structural assembly comprising a system of panel mounting to the structure. An anchor piece is for fixing to an edge of the panel. A base member is mounted to a structural frame member. The mounting system includes a tongue provided by the anchor piece and a mouth provided by the base member, the tongue being receivable within the mouth. The mouth provided by the base member is therefore elongated and extends along the base member so that the tongue of the anchor piece can be inserted into the mouth at any longitudinal position. The mouth is situated outside the corner zone of the structure member.

The fixing assembly according the invention comprised a side section of the box structure and fixtures.
The section having a side wall and a bottom wall, especially perpendicular to the side wall, is provided in the transverse section at its external corner with a concave recess limited by a surface of about half of a circle, in which is located a concentric filling with round cross-section. That filling is connected by a short rib with the side wall, due to which the surface of the recess and the surface of the filling constitute an arched channel accessible from the external side of the corner of the side and bottom walls. The round filling is tangent to the external surface of the side wall and the external surface of the rib is advantageously located along the external surface of the side wall.

The section has in its upper part a profiled part in form of a stepped flange connected with the side wall of the section, designed to set on it the elements built into the box structure. The flange is situated on the same side of the side wall as the bottom wall of the section. Is has two bearing surfaces, the lower one of which is located directly at the side surface of the section. In a section used to hold a the solar collector, the upper bearing surface of the serves to support the window pane of the solar collector and the lower one to fix the pressing section, which clamps the solar collector window pane on its circumference to the bearing surfaces along the four side walls of the box structure.

The fixtures being part of the assembly are connected with the side walls of the box structure in a turning and sliding way, enabling the fixtures to abut to the surface of these walls, being applied during shipment. The turning-and-sliding fixtures are provided with holes for screw fasteners fixing them to the substrate, especially screws. The sliding-and-turning fixtures are used on at least two box structure side walls, which are located at right angles to the structural elements of the discontinuous substrate consisting mostly of slats of the roof structure directly supporting the roofing.

The side walls of the box structure, in the meaning of this description, especially applied to solar collectors fixed on slanting roof surfaces, are all walls of the box structure, usually a cubicoid one, with the exception of the front wall provided with a window panel and the box bottom on the opposite side. The side walls of the box structure include thus also these walls, which in a solar collector arrangement on the roof slope are either at the upper or the lower side of that solar collector.

In the first version of the fixing assembly, the sliding-and-turning connection of the fixtures with the side wall of the box structure consists in that the section, which is the subject of this invention, has a concave longitudinal recess in the external corner of the side and bottom walls, in which is located a round filling, and the sliding-and-turning fixture has the form of a flat plate with a semicircular bend on one of its edges. The plate of the fixture is provided with holes for screw fasteners fixing the fixture to the substrate. The concave recess in the section and its round filling constitute an arched channel, in which the semicircular bend of the fixture is placed as a hook.

The sliding-and-turning fixture can assume two positions in the arched groove. In the operating position of the fixture, when it is perpendicular to the side wall of the box structure and fixes that structure to the substrate, the semicircular bend grips to the maximum extend the round filling in the corner of the section, and by the same occupies almost the whole arched channel in the section on a length corresponding to the width of the fixture. In the shipping position, the plate of the sliding-and-turning fixture is turned by approximately 90° about the round filling in the section corner, due to which it abuts to the side wall of this box structure section. The half-circular bend of the sliding-and-turning fixture occupies in its shipment position approximately one half of the bent channel, on a length corresponding to the width of the fixture.

The fixing assembly can be provided, beside sliding-and-turning fixtures, also with fixtures of a different design, especially at the side walls of the box structure parallel to the structural elements of the discontinuous substrate consisting mostly of purlins or battens of the roof structure. At the side wall of the box structure located at the bottom side of a solar collector installed on a sloping roof are used retaining fixtures provided with a lateral retainer on their bottom surface, advantageously in form of a plate perpendicular to the surface of the fixture. That retainer abuts against a purlin of the roof structure, preventing the solar collector from sliding down during its mounting on a slanting roof. The retaining fixture, besides being provided with the retainer, is characteristic in that it has the form of a flat plate with a semicircular bend on one of its edges, which bend mates with the arched channel in the section of the side wall of the box structure. The plate of the retaining fixture has holes for screw fasteners clamping the fixture to the substrate construction. The retaining fixture has also a stop on its upper surface, in form of a plate perpendicular to the surface, located close to the semicircular bend on the fixture edge. That stop, when resting at the side wall of the box structure, prevents lifting of the fixture plate, so securing the retainer from losing its support on the batten or purlin.

At the side wall of the box structure located at the upper side of the solar collector installed on a slanting roof are placed frame fixtures. These fixtures have the form of a closed frame with rectangular cross-section, the longer side of the cross-section rectangle, being several times longer than the other side, is parallel to the side wall of the box structure to which the frame fixture is fastened. At one of its bottom corners, the frame fixture has a protruding semicircular bend, identical with the bend of the sliding-and-turning fixture. That bend grasps the round filling in the bottom corner of the section, occupying the arched channel in the section on a length corresponding to the width of the fixture. The upper part of the frame fixture rests on the upper part of the side section either directly, or by means of other elements mounted there. On the upper surface of the frame fixture are mounted slats under which, inside the frame fixture, is arranged a duct for the pipes admitting the liquid to the solar collector and carrying the heated liquid away.

When the box structure is provided with sliding-and-turning fixtures with a retainer according to the second version of the invention, then identical retainers are provided in both the retaining fixtures and the frame fixtures.

The advantage of using the invention when mounting the box structure on its substrate consists in easy achieving the required location of the sliding-and-turning fixtures, corresponding to the arrangement of the structural elements of the discontinuous substrate. The possibility to move the sliding-and-turning fixtures in the position abutting to the side wall of the section reduces the overall size of the box structure together with its fixture, which eases handling.

The elements of the invention are shown in examples of execution in the drawing, in which the separate figures present:
- Fig. 1 -: a side section of the box structure, in front view;
- Fig. 2 -: the box structure of the solar collector, mounted on battens of the roof supporting structure, in axonometric view;
- Fig. 3 -: a cross-section of the connection between the box structure and the sliding-and-turning fixture;
- Fig. 4 -: a detail of the box structure with the sliding-and-turning fixture, in axonometric view;
- Fig. 5 -: a cross-section of the connection of the box structure with the retaining fixture.
- Fig. 6 -: a cross-section of the connection of box structure with the frame fixture.

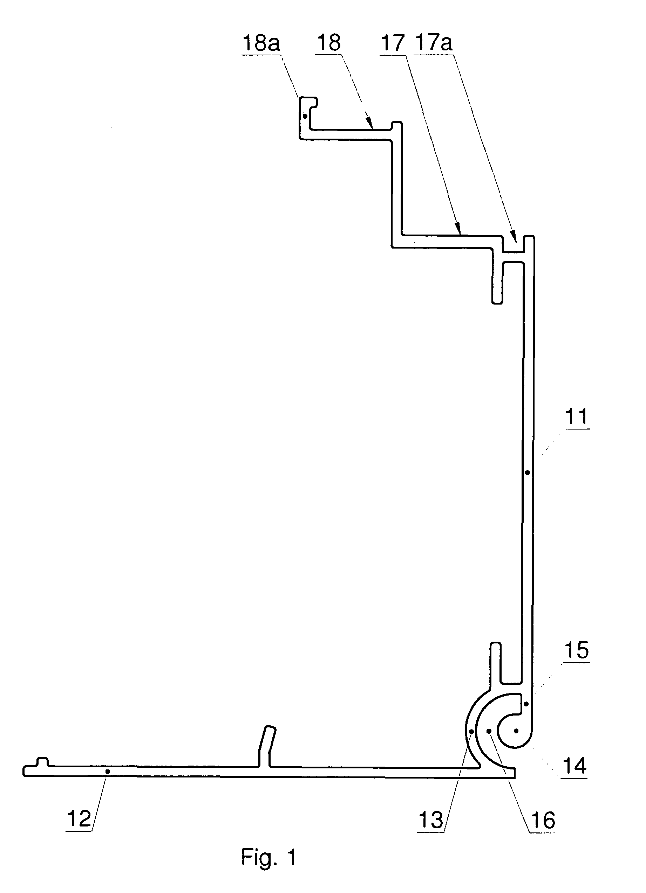

Example 1. The side section (fig.1) of the box structure, particularly for solar collectors, has a side wall 11 and a bottom wall 12 perpendicular to it, which in the box structure composed of these sections faces the inside of the box. In the transverse section of the section, in the external corner consisting of the side wall 11 and the bottom wall 12 there is made a concave recess 13 limited by a surface on about half of a circle. Inside that recess 13, concentrically with its semicircle, is arranged the filling 14 with round cross-section, connected by a short rib 15 with the side wall 11 of the section. Following that, the surfaces of the recess 13 and the filling 14 constitute the arched channel 16 accessible from the outside of the corner of the side wall 11 and the bottom wall 12, the channel being designed to grip in the section the fixtures attaching the box structure to the substrate. The filling 14 is tangent to the external surface of the side wall 11, and the external surface of the rib lies also on the external surface of that side wall.

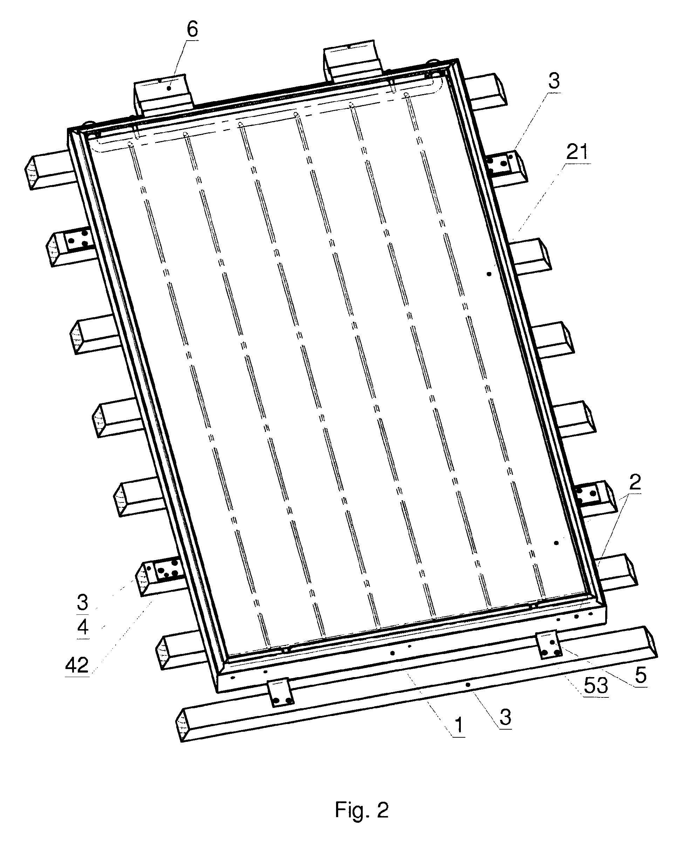

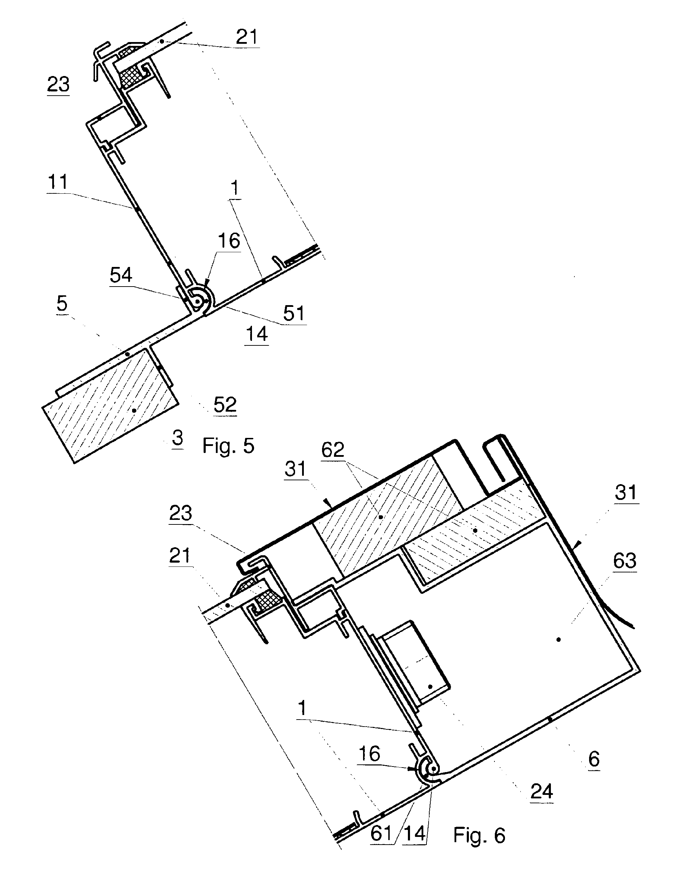

In its upper part, the section has the form of a stepped flange designed to set on it elements of the solar collector mounted in the box structure. The flange has a lower bearing surface 17 connected with the side wall 11, and an upper bearing surface 18, both located at the same side of the side wall 11 as the bottom wall 12 of the section. On the upper bearing surface 18 is placed the window pane 21 of the solar collector together with its seals 22 (fig. 2, 3, 5, and 6), and on the lower bearing surface 17 is set the pressing section 23, which is fastened to this surface by screws and fixes the window pane 21 in the box structure of the solar collector.

The lower bearing surface is provided with a grove 17a fixing the pressing section 23 to the side section 1 of the box structure. The upper bearing surface 18 is provided on its end with a boss 18a serving to fix the elements of the sealing 22 of the solar collector.

Example 2. The fixing assembly of the box structure locating it on a discontinuous substrate (fig. 2 - 6) is presented as an example of arranging a solar collector 2 on a slanting roof fixed to the battens 3 of the roof structure. The fixing assembly has three types of fixtures fastening the box structure to the substrate. At two side walls of the solar collector 2, placed at right angles to the roof structure battens 3, are provided the sliding-and-turning fixtures 4. At the side wall, which is parallel to the battens 3 of the roof structure and located at the bottom part of the solar collector 2, are provided the retaining fixtures 5, while at side wall parallel to the battens 3 of the roof structure located at the upper part of the solar collector 2, are provided the frame fixtures 6. All fixtures are connected to the side sections 1 of the box structure using the arched channel 16 in the external corner of the side wall 11 and the bottom wall 12 of these sections of the box structure.

The sliding-and-turning fixture 4 has the form of a flat plate, which on one of its edges has a semicircular bend 41 entering into the arched channel 16 in the external corner of the side and bottom walls of the side section 1 of the box structure. In operating position, the plate of the sliding-and-turning fixture 4 is located perpendicularly towards the side wall 11 of the section 1, constituting an extension of the bottom wall 12 outside the section. The semicircular bend 41 of the fixture grasps the round filling 14 in the corner of the section 1, occupying almost completely the arched channel 16 in the section on a length corresponding to the width of the fixture. In that position, the plate of the sliding-and-turning fixture 4 rests on the batten 3 of the roof structure, to which the fixture is fastened by screws passing through the holes 42.

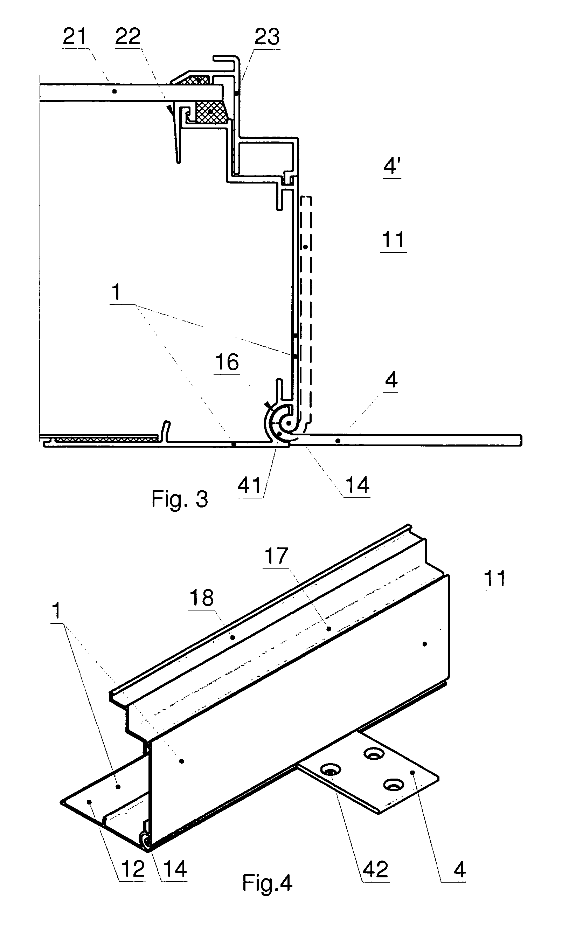

In shipment position, the plate of the sliding-and-turning fixture 4 is turned by 90° about the filling 14 and abuts to the side wall 11 of the box structure section, which in the drawing fig. 3 is marked as the position 4' of that fixture. In shipment position, the semicircular bend 41 it occupies about half of the arched channel 16, on a length corresponding to the width of the fixture. Both in the operating position, as in the shipment position, disconnecting the fixture from the section is possible only by sliding it to the end of the wall of the box structure.

The retaining fixture 5 has the form of a flat plate with a semicircular bend 51 on one of its edges, identical with the bend on the sliding-and-turning fixture. The semicircular bend 51 grasps the round filling 14 in the corner of the section 1, occupying the arched channel in that section on a length corresponding to the width of the fixture. Besides, the retaining fixture 5 is provided on its bottom surface with a lateral retainer 52 in form of a plate perpendicular to the plate of the fixture. In the box structure of the solar collector arranged on the supporting structure of a slanting roof, the lateral retainer 52 rests on the batten 3, preventing sliding down of the box structure. The part of the retaining fixture 5 extending beyond the lateral retainer 52 rests on the batten 3 of the roof structure, to which it is being fastened by screws passing through the holes 53 in the plate of that fixture. On the upper surface of the retaining fixture 5, it is provided with a stop 54 in form of a perpendicular plate located close to the semicircular bend 51 on the edge of the fixture. The stop 54 rests on the side wall 11 of the section of the box structure, preventing the retaining fixture 5 from being lifted, and in consequence preventing loss of support by the lateral retainer 52 on the batten 3 of the roof structure. Due to applying the stop 54, the retaining fixture can only slide in the section 1.

The frame fixture 6 has the form of a closed rectangular frame, having the longer side of the frame, which is several timed longer than the other side of the rectangle, parallel to the side wall 11 of the box structure. At one of its bottom edges, the frame fixture has a jutting-out semicircular bend 61, identical to the bend of the sliding-and-turning fixture. The semicircular bend 61 grasps the round filling 14 in the bottom corner of the section 1, occupying the arched channel in that section on a length corresponding to the width of the fixture. The upper part of the frame fixture 6 rests on the upper part of the section 1 through the pressing section 23 fixed there. The upper part of the frame fixture 6 has a stepped offset on both bearing surfaces of which are placed the slats 62, and underneath it, inside the frame fixtures 6, is formed the piping duct 63 for the feeding and draining fluid lines connected to the joints 24 of the solar collector. That duct is supplemented by the flashing assembly 31, draining rainwater flowing down the roof.

## Claims

1. Box-structure fixing assembly, particularly on a discontinuous substrate, designed to fix a solar collector on the supporting structure of the roof, comprising a box structure with a side section side section having a side wall with a shaped form for setting elements mounted in the box structure, and also having a bottom wall, especially perpendicular to the side wall, which in the box structure faces its inside the assembly further comprising fixtures connected with the side walls of the box structure, preferably provided with holes for screw fasteners fixing the fasteners to the substrate, **characterized in that** in the cross-section of the side section in its external corner of the side wall (11) and bottom wall (12) it is provided with a longitudinal concave recess (13) limited by the surface of approximately half of a circle, in which, concentrically with that semicircle, is situated the filling (14) with round cross-section, connected by a short rib (15) with the side wall (11), forming together with the recess (13) an arched channel (16), accessible from the outside of the corner of the side and bottom walls, the fixtures are connected with these walls in a turning and sliding way, enabling abutting of the fixtures to the surface of these walls and the sliding-and-turning fixture (4) has the form of a flat plate with a semicircular bend (41) on one of its edges, which is placed as a retainer in the arched channel (16) of the section.

2. Fixing assembly according to claim 1, **characterized in that** the filling (14) with round cross-section is tangent to the external surface of the side wall (11), and the external surface of the rib (15) lies along the external surface of the external wall.

3. Fixing assembly according to claim 1 or 2, **characterized in that** the shaped form of the section serving to mount embedded elements in the box structure consists of a stepped flange connected with the side wall of the section.

4. Fixing assembly according to claim 3, **characterized in that** the stepped flange is located at the same side of the side wall (11) as the bottom wall (12) of the section, and consists of two bearing surfaces (17), (18).

5. Fixing assembly according to claim 1, **characterized in that** it has frame fixtures (6) sliding in the section, provided with a retainer bent in semicircular form (61) placed in the arched channel (16) of the side section (1) and abutting against the upper part of that section.

6. Fixing assembly according to claim 1, **characterized in that** it has retaining fixtures (5), advantageously in form of a flat plate with a semicircular bend (51) on one of its edges, provided with a lateral retainer (52) on the bottom surface, preferably in form of a plate perpendicular to the surface of the fixture.

7. Fixing assembly according to claim 6, **characterized in that** the retaining fixtures (5) have a stop (54) on their upper surface, preferably in form of plate perpendicular to the surface of the fixture, located at the semicircular bend (51) on the edge of the fixture.

## Patentansprüche

1. Boxförmige Befestigungseinrichtung, besonders auf einem diskontinuierlichen Substrat, entwickelt um eine Solaranlage an der Tragkonstruktion eines Daches zu befestigen, die beinhaltet: eine Boxenstruktur mit einem Seitenteil, wobei die Seitenwand eine gestaltete Form hat, für Einstellung von Elementen befestigten an der Boxenstruktur, und die eine Bodenwand aufweist, insbesondere senkrecht verlaufend zu der Seitenwand, die in der Boxenstruktur ihrer Innenseite gegenübersteht, wobei die Einrichtung weiter umfasst: Befestigungsmittel verbunden mit den Seitenwänden der Boxenstruktur, vorzugsweise mit Löcher für Schraubbefestigungen, die die Befestigungsmittel am Substrat befestigen, **dadurch gekennzeichnet, dass** im Querschnitt von der Seitenteil, in der Außenecke der Seitenwand (11) und der Bodenwand (12), sie eine längslaufende konkave Vertiefung (13) aufweist, durch eine Oberfläche von etwa Hälfte eines Kreises begrenzt, worin, konzentrisch mit dem Halbkreis, sich eine Füllung (14) mit rundem Querschnitt befindet, verbunden mit der Seitenwand (11) mittels einer kurzen Rippe (15), bildend zusammen mit der Vertiefung (13) eine gewölbte Rinne (16), zugänglich von außerhalb der Ecke von der Seiten- und Bodenwände, die Befestigungsmittel werden mit diesen Wänden auf eine drehende und gleitende Weise verbunden, so dass die Befestigungsmittel an die Oberfläche dieser Wände angrenzen und die drehende und gleitende Befestigungsmittel (4) hat die Form einer flachen Platte mit einer halbrunden Biegung (41) an einem von ihren Ränder, die als Halterung in der gewölbten Rinne (16) des Teils platziert ist.

2. Befestigungseinrichtung nach Anspruch 1, **dadurch gekennzeichnet, dass** die Füllung (14) mit rundem Querschnitt tangential zur äußeren Fläche der Seitenwand (11) ist, und die äußere Fläche der Rippe (15) entlang der äußeren Fläche der Außenwand liegt.

3. Befestigungseinrichtung nach Anspruch 1 oder 2, **dadurch gekennzeichnet, dass** die gestaltete Form des Teils, die zur Befestigung der eingebetteten Elemente in der Boxenstruktur dient, einen Stufenflansch umfasst, der mit der Seitenwand des Teils verbunden ist.

4. Befestigungseinrichtung nach Anspruch 3, **dadurch gekennzeichnet, dass** der Stufenflansch auf der gleichen Seite der Seitenwand (11) wie die Bodenwand (12) des Teils liegt, und dass er zwei Auflageflächen (17, 18) umfasst.

5. Befestigungseinrichtung nach Anspruch 1, **dadurch gekennzeichnet, dass** sie im Teil gleitende Rahmenbefestigungen (6) umfasst, mit halbrunder Halterung (61), platziert in der gewölbten Rinne (16) des Seitenteils (1) und angrenzend an den oberen Bereich des Teils.

6. Befestigungseinrichtung nach Anspruch 1, **dadurch gekennzeichnet, dass** sie Halterungen (5) aufweist, vorteilhaft in der Form einer Platte mit einer halbrunden Biegung (51) an einem von ihren Ränder, mit einer seitlichen Halterung (52) auf der unteren Fläche, vorzugsweise in der Form einer Platte die senkrecht zu der Fläche der Halterung verläuft.

7. Befestigungseinrichtung nach Anspruch 6, **dadurch gekennzeichnet, dass** die Halterungen (5) einen Anschlag (54) auf ihrem oberen Bereich aufweisen, vorzugsweise in der Form einer Platte die senkrecht zu der Fläche der Halterung verläuft, platziert an der halbrunden Biegung (51) an einem von ihren Ränder.

## Revendications

1. Ensemble de fixation de structure de caisson, en particulier sur une base discontinue, prévu pour le montage d'un capteur solaire sur une structure de support de toit, comprenant une structure de caisson avec une section latérale ayant une paroi latérale avec un élément de forme destiné pour les dispositifs de réglage montés dans la structure de caisson, ayant également une paroi de fond, en particulier perpendiculaire à la paroi latérale, qui dans la structure de caisson est située en face de son intérieur, l'ensemble comprenant également des fixations reliées au parois latérales de la structure de caisson, de préférence fourni avec des trous pour les fixations à vis qui attachent les fixations à la base, **caractérisé en ce que** dans la coupe transversale de la section latérale dans son coin extérieur de la paroi latérale (11) et de la paroi de fond (12) il est fourni avec un évidement concave longitudinal (13) limité par une surface d'un demi-cercle approximativement, dans lequel, concentriquement au demi-cercle se trouve un remplissage (14) de coupe transversale ronde, relié par une courte ailette (15) avec la paroi latérale (11), formant avec l'évidement (13) un canal arqué (16), accessible de l'extérieur du coin de la paroi latérale et la paroi de fond, et les fixations sont reliées à ces parois de manière tournante et glissante, ce qui permet l'adhésion des fixations à la surface de ces parois et la fixation glissante-tournante (4) est en forme d'une plaque plate avec une courbure demi-circulaire (41) sur l'une de ses arêtes, qui est mise en place comme un dispositif de retenue dans le canal arqué (16) de la section.

2. Ensemble de fixation selon la revendication 1, **caractérisé en ce que** le remplissage (14) à section transversale ronde est tengent à la surface extérieure de la paroi latérale (11) et la surface extérieure de l'ailette (15) se trouve le long de la surface extérieure de la paroi extérieure.

3. Ensemble de fixation selon la revendication 1 ou 2, **caractérisé en ce que** l'élément de forme de la section destiné pour le montage des dispositifs intégrés dans la structure de caisson se compose d'une bride étagée reliée à la paroi latérale de la section.

4. Ensemble de fixation selon la revendication 3, **caractérisé en ce que** la bride étagée se trouve du même côté de la paroi latérale (11) que la paroi de fond (12) de la section et se compose de deux surfaces d'appui (17, 18).

5. Ensemble de fixation selon la revendication 1, **caractérisé en ce qu'**il possède des fixations cadre (6) glissant dans la section, fourni avec un dispositif de retenue courbe en forme demi-circulaire (61) placé dans le canal arqué (16) de la section latérale (1) et s'appuyant sur la partie supérieure de cette section.

6. Ensemble de fixation selon la revendication 1, **caractérisé en ce qu'**il possède des dispositifs de retenue (5), avantageusement en forme d'une plaque plate avec une courbure demi-circulaire (51) sur l'une de ses arêtes, fourni avec un dipositif de retenue latéral (52) sur la surface de fond, de préférence en forme d'une plaque perpendiculaire à la surface de la fixation.

7. Ensemble de fixation selon la revendication 6, **caractérisé en ce que** les dispositifs de retenue (5) possèdent un arrêt (54) sur leur surface supérieure, de préférence en forme d'une plaque perpendiculaire à la fixation, située sur la courbure demi-circulaire (51) sur l'arête de la fixation.
